# EUROPEAN PATENT APPLICATION

(11) **EP 0 999 505 A2**
(43) Date of publication of application: **10.05.2000**
(21) Application number: 99306737.0
(22) Date of filing: 25.08.1999
(51) Int. Cl.: G06F 17/30

(54) **Datebase query technique**

(30) Priority: 07.11.1998 GB 9824385
(71) Applicant: International Computers Ltd., London, EC2A 1SL (GB)
(72) Inventor: Oldfield, Daniel Emlyn, Woodcote, Reading RG8 0QE (GB); Newman, Thomas, Reading RG30 2BP (GB)
(74) Representative: Guyatt, Derek Charles

(57) **Abstract**

A computer system includes a graphical user interface, which enables a user to create and update a database query in a simple manner. The interface displays logic conditions within nested graphical containers (e.g. boxes) representing nested boolean AND and OR expressions. Containers and conditions may be dragged around to modify the logic. New containers may be created within existing containers. New conditions may be created within existing containers, by selecting a condition type from a predetermined list of condition types, and then entering details specific to the selected type. The query is used to access the database, so as to identify a subset of records that satisfy the query, and to display those records to the user.

## Description

### Background to the invention

This invention relates to a database query technique. The invention is particularly, although not exclusively, concerned with databases storing information about customers in a retail environment. In such an environment, a user may wish to create sets of customers, referred to as segments, for example for targeting advertising or promotions. A segment is defined by specifying the conditions for membership of that segment. These conditions may involve attributes of the customer (predefined or user-defined), ownership of identifying tokens (such as credit cards or loyalty cards), or purchasing behaviour.

Conventionally, segments may be defined by writing queries in a language such as SQL. A problem with this, however, is that such languages are generally difficult to learn and to use, especially for non-technically oriented people. In particular, complex queries involving nested boolean logic conditions, involving AND and OR operators, can be difficult to understand and to use correctly.

The object of the present invention is to provide a way of alleviating these problems.

### Summary of the invention

According to the invention, a computer system comprises:
(a) a database containing a number of records;
(b) a graphical user interface for enabling a user to create and update a query using nested graphical containers to represent nested boolean expressions; and
(c) a process for using the query to access the database, so as to identify the subset of records that satisfy that query.

### Brief description of the drawings

Figure 1 is an overall view of a computer system embodying the invention.
Figure 2 shows a main screen for defining a segment.
Figure 3 is a flow chart showing the operation of the system in response to various user interactions.
Figures 4 to 11 show a number of further screens used for defining a segment, and for displaying a list of members of a segment.

### Description of an embodiment of the invention

One computer system and method in accordance with the invention will now be described by way of example with reference to the accompanying drawings.

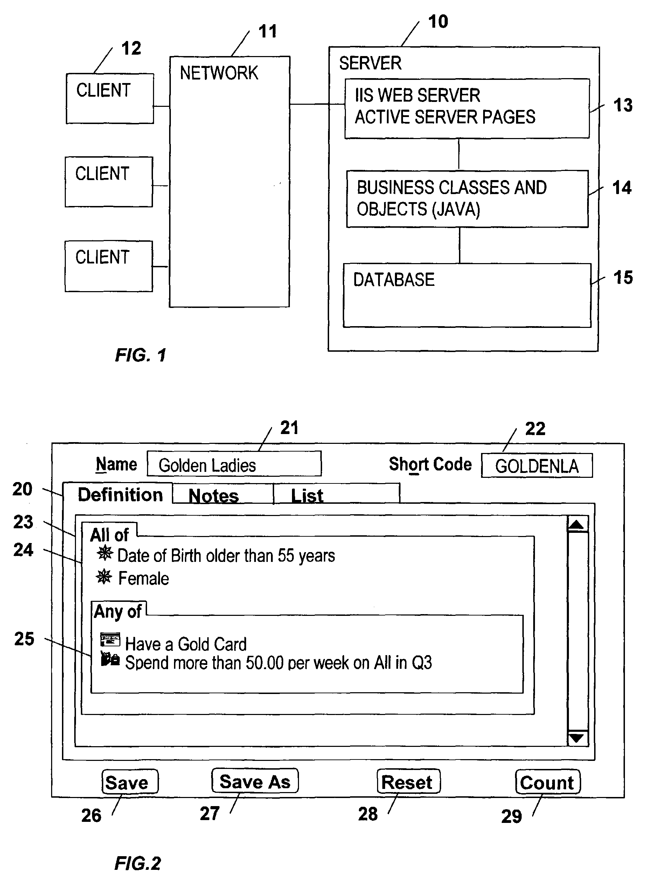

Referring to Figure 1, the system comprises a server computer 10 and a number of client computers 12, interconnected by a network 11. The server computer runs an Intranet Information Server (IIS) application 13, consisting of Active Server Pages in which are embedded a number of business classes and objects 14, written in Java. The business classes and objects reference a database 15, which in this example is provided by Microsoft SQL Server 7.0 software. The database contains information about customers, including attributes such as date of birth, sex, tokens, purchasing history, and expressed preferences (derived from questionnaires, for example).

Users connect to the server application using a conventional Internet browser, which in the present embodiment is Microsoft Internet Explorer 4. No other software needs to be installed on the client. The server application automatically downloads HTML pages, Java Scripts, and ActiveX controls to the client in response to user input, and the client returns completed forms to the server application. This means that the server application can be used from anywhere in an organisation, without the need to install or to update special software, or to manage disk space on the client computers.

The server application 13 includes a tool for enabling the user to create new segments and to edit and use existing ones. Starting this tool causes a menu box to be displayed, which asks the user whether an existing segment is to be used, or a new one created. If an existing segment is selected, the server application prompts the user for the name of the segment, and then retrieves a definition of the segment. The segment definition includes a logic string, which specifies the conditions for membership of the segment in the form of a conventional boolean logic expression, containing nested AND and OR operations as necessary. For a new segment, a new (initially empty) logic string is created.

A main screen is then displayed, as shown in Figure 2. This screen contains three tabs 20, labelled "Definition", "Notes" and "List". Initially, the "Definition" tab is displayed. The screen also includes two text boxes 21, 22, labelled "Name" and "Short Code". For a new segment, both of these boxes are blank, and can be filled in by the user. For an existing segment, the existing name and short code are displayed; the user may edit the name, but the short code is greyed to indicate that it cannot be changed.

The Definition tab contains one scrollable pane 23, in which the conditions for segment membership (as defined in the segment's logic string) are displayed in graphical form, as a series of nested logic boxes 24, 25. Each logic box may contain a number of condition lines and/or one or more further logic boxes. Each condition line has an icon that represents its type.

There are two possible types of logic box, labelled "Any of" and "All of". An "Any of" box defines a logical OR, i.e. a subset of customers who satisfy any of the conditions contained in the box, including conditions represented by any enclosed logic boxes. An "All of" box defines a logical AND, i.e. a subset of customers who satisfy all of the conditions contained in the box, including conditions represented by any enclosed logic boxes.

As an example, Figure 2 shows the screen displayed for an segment called "Golden Ladies", representing a selection of customers who satisfy the conditions:
■ Older than 55 years AND
■ Female AND
■ Have a Gold Card OR Spend more than £50 per week.

It should be noted that "NOT" is not used as a separate box-level operator, only as part of an individual condition.

For a new segment, the Definition tab initially displays one "All of" logic box, containing one empty "Any of" logic box, with no condition lines.

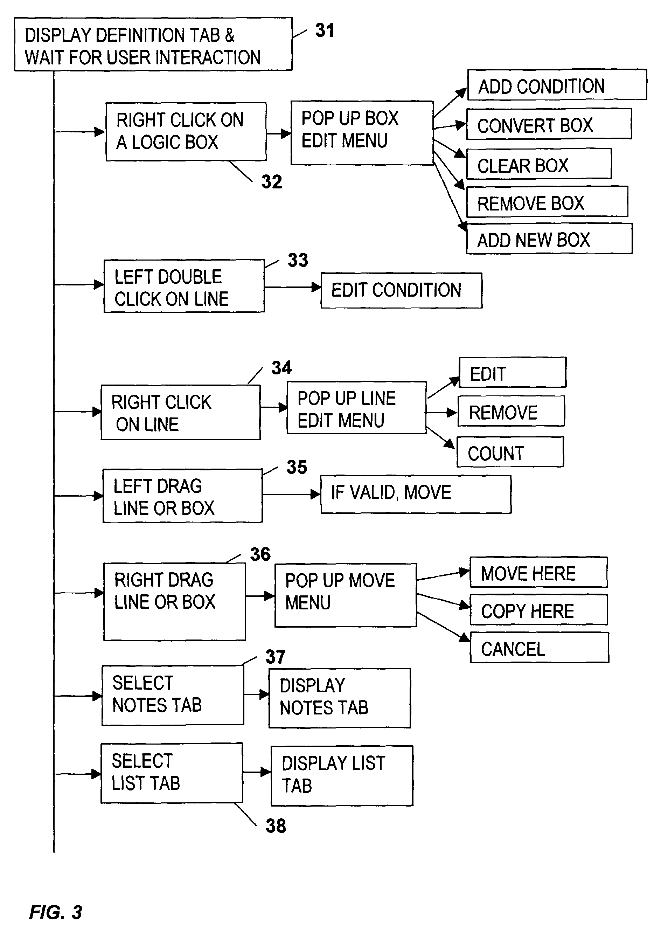

Figure 3 is a flowchart showing the operation of the system. As indicated by step 31, the system displays the definition tab (Figure 2), and waits for a user interaction.

As indicated by Figure 3, step 32, if the user right clicks on a logic box (i.e. on a blank area within the box), the application displays a pop-up edit menu containing the following options: "Add condition", "Convert box", "Clear box", "Remove box" and "Add new".

Clicking on the "Convert box" option causes the selected logic box to be converted to the opposite type, i.e. from "Any of" to "All of" or vice versa.

Clicking on the "Clear box" option deletes any existing condition lines and any enclosed boxes in the selected box.

Clicking on the "Remove box" option deletes the selected logic box and all its contents.

Clicking on the "Add new" option creates a new logic box of the opposite type, nested within the selected box: e.g. if the selected box is an "All of" box, this creates an "Any of" box nested within it.

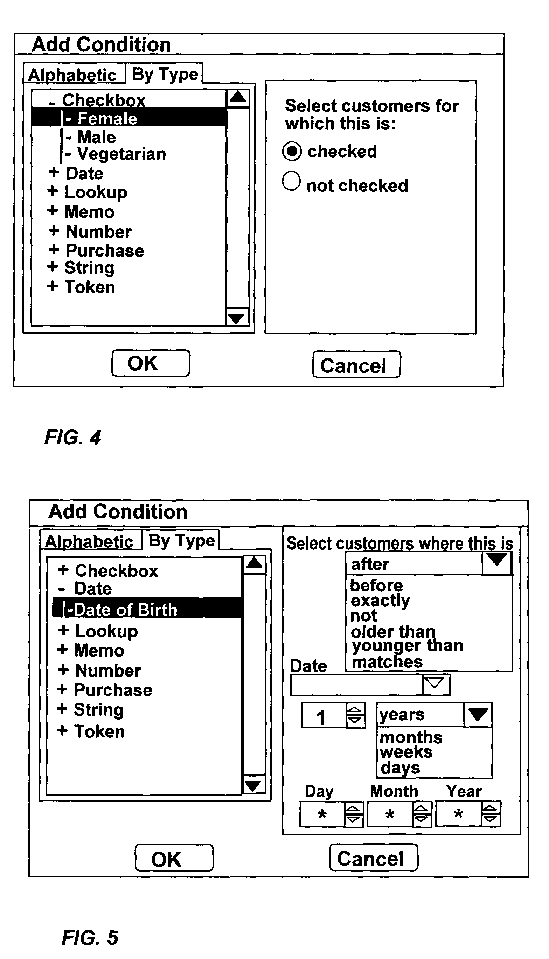

Clicking on the "Add condition" option causes the application to display a pop-up window as shown in Figure 4. This window contains two tabs, labelled "Alphabetic" and "By Type". The By Type tab displays all the possible attributes that can be used to define a condition, grouped by type and arranged in a tree structure. In the present example, the following attribute types are displayed: Checkbox, Date, Lookup, Memo, Number, Purchase, String and Token. Clicking on a "+" sign in this tree structure expands the tree to the next level. For example, in Figure 4, the Checkbox item has been expanded to show that it this contains the following attributes: Female, Male, and Vegetarian. The Alphabetic tab shows all the attributes in normal sort order, not categorised by attribute type. The user can select one attribute, either from the Type tab or from the Alphabetic tab.

The right-hand frame of the Add Condition window changes according to the particular attribute type selected. Figure 4 shows the case where a Checkbox attribute (such as "Female") has been selected. In this case, the frame allows the user to specify "Checked" or "Not Checked". This returns a condition line of the form:
*Attribute* is [not] checked.

Figure 5 shows the case where a Date attribute (such as date of birth) is selected. In this case, the right-hand frame of the Add Condition window allows the user to specify one of a number of operators as shown. It should be noted that the three date formats shown are alternatives: only one appears at a time, depending on the selected operator. The "after", "before", "exactly", and "not" operators all require the user to enter an absolute date in a date box. The "older than" and "younger than" operators require the user to enter an age, specified in years, months, weeks or days. The "matches" operator requires the user to enter a date pattern, which may include the wildcard character "*". This returns a condition of one of the following three forms, depending on the particular operator:
*Attribute* **is** {after | before | exactly | not} *date*.
*Attribute* **is** {older | younger} **than** *age*
{years | months | weeks | days}.
*Attribute* {matches | does not match} *date pattern*.

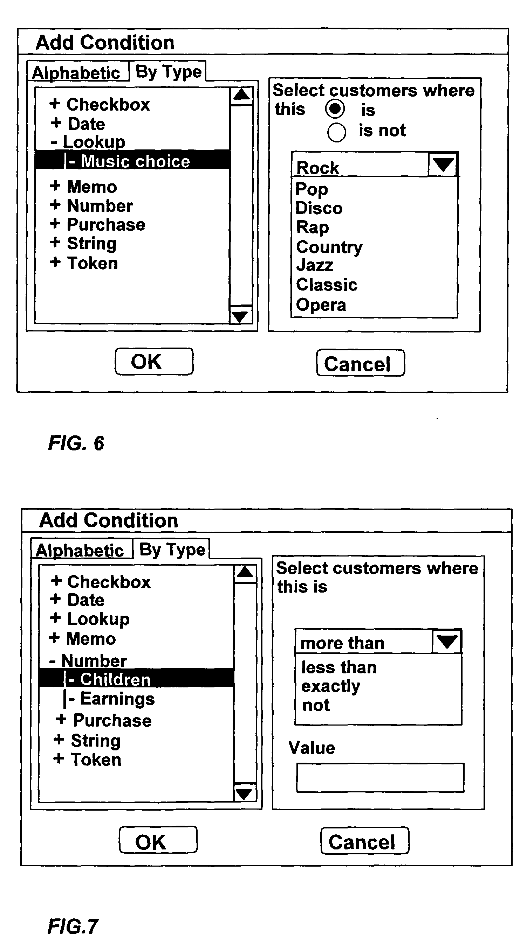

Figure 6 shows the case where a Lookup attribute is selected. In this case, the right-hand frame of the Add Condition window displays a list indicating the possible values for the attribute, and buttons for selecting "is" or "is not". For example, in Figure 6, the list indicates possible values for the "music choice" attribute. (This information may have been gathered from customers by means of a questionnaire). This returns a condition of the form:
*Attribute* {is | is not} *value*.

Figure 7 shows the case where a Number attribute is selected. In this case, the right-hand frame of the Add Condition window allows the user to enter a value and to select one of a number of comparison options. This returns a condition of the form:
*Attribute* {more than | less than |exactly | not} *value*.

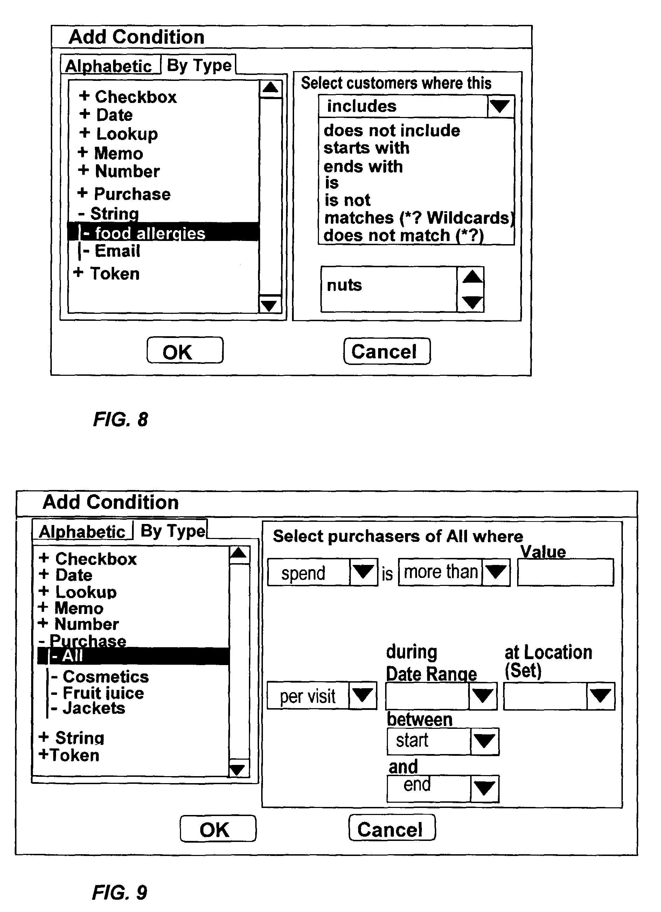

Figure 8 shows the case where a String or Memo attribute is selected. In this case, the right-hand frame of the Add Condition window allows the user to select a string value or pattern, and to select one of a number of comparison options. This returns a condition of one of the following two forms:
*Attribute* {includes | does not include |
starts with | ends with | is | is not} *string*.
*Attribute* {matches | does not match} *pattern*.

Figure 9 shows the case where a Purchase Tracker attribute is selected. In this case, the right-hand frame of the Add Condition window allows the user to specify a condition based on the customer's purchase history for all or a selected category of purchases. This returns a condition of the form:
*Purchase Tracker* {spend |margin | markdown | discount|
item count | visit count}
**is** {more than | less than | exactly | not} *value*
{per week | per month | overall}
**between** *start date* **and** *end date* **at** *location set*.

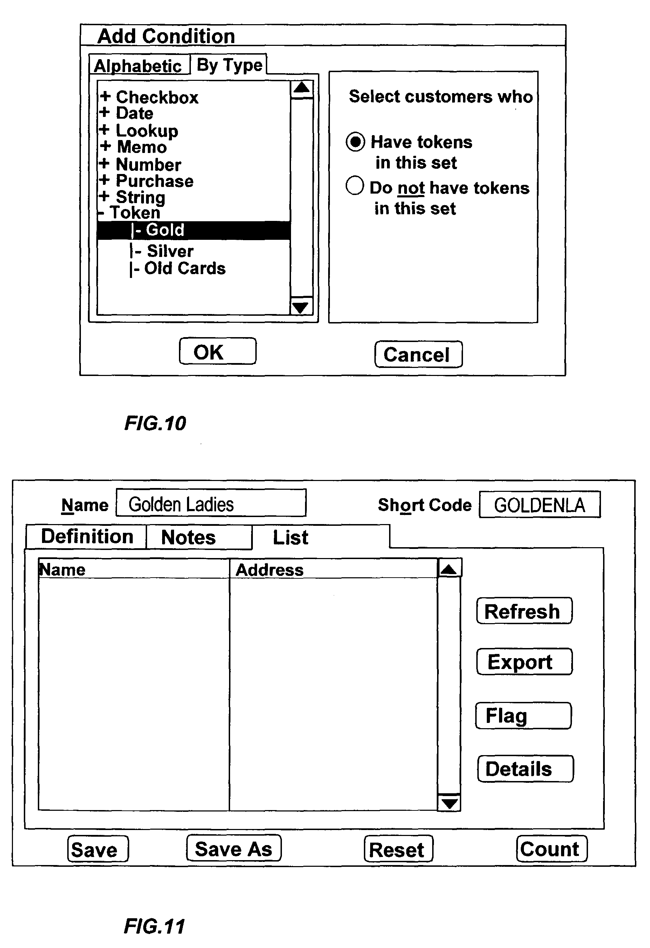

Figure 10 shows the case where a Token attribute is selected. In this case, the right-hand frame of the Add Condition window allows the user to select customers who have or do not have a particular token (such as a Gold Card). This returns a condition of the form:
{Have a |Do not have a} *token set*.

The Add Condition window (Figures 4 to 10) contains "OK" and "Cancel" buttons. Clicking on the "OK" button returns to the main screen (Figure 2), adding the new condition to the selected logic box, if it is not already there. Clicking on the "Cancel" button returns to the Definition tab, without making any changes.

Referring to Figure 3, step 33, if the user left double clicks on a condition line in the Definition tab (Figure 2), the application pops up an Edit Condition window. This is the same as the Add Condition window described above (Figures 4 to 10) except that it has "Edit Condition" in its title line, instead of "Add Condition", and displays the current settings for the selected condition line. This allows the condition line to be edited. Clicking on "OK" returns to the Definition tab, and substitutes the new condition line for the existing one. Clicking on "Cancel" returns to the Definition tab without making any changes.

Referring to Figure 3, step 34, if the user right clicks on a condition line in the Definition tab (Figure 2), the application displays a pop-up menu (not shown), providing three options: "Edit", "Remove" and "Count". The "Edit" option calls up the Edit Condition window described above. The "Remove" option causes the condition line to be removed. The "Count" option causes the server application to access the database and to count the number of customers who satisfy the currently selected condition line. The result is displayed in a count message box (not shown).

Referring to Figure 3, step 35, if the user left drags a condition line or logic box from one position to another, the line or box is moved, provided the move is valid (i.e. it is from one logic box to another).

Referring to Figure 3, step 36, if the user right drags a condition line or logic box from one position to another, the application displays a pop-up menu (not shown) at the destination position, providing three options: "Move here", "Copy here", and "Cancel". The "Move here" option causes the line or box to be moved. The "Copy here" option makes a copy of the line or box at the destination position. Both of these options are subject to a validity check, which permits moving or copying only from one box to another. The "Cancel" option simply closes the pop-up menu, without moving or copying anything.

If the user left clicks on a condition line or logic box, or left double clicks on a logic box, no action is performed.

In all the cases described above where a change has been made to the segment definition, on returning to the main screen the server application updates the segment's logic string, to reflect the changes. It also updates the graphical representation in the Definition tab.

The main screen (Figure 2) contains four buttons 26 - 29, labelled "Save", "Save As", "Reset" and "Count".

The "Save" button causes the server application to validate the segment. Validation includes checking that the Name and Short Code are unique amongst the stored segments. If any errors are found, they are presented to the user in a dialogue box with an OK button. If the validation is satisfactory, the segment definition is saved at the server, and a confirmation message is returned to the user.

The "Save As" button is available only when an existing segment has been opened. It causes a modal dialogue box to be displayed, allowing the user to enter a segment name and short code under which a copy of the segment definition is to be saved at the server.

The "Reset" button pops up a confirmation box, with the message "Discard changes?" and with "OK" and "Cancel" buttons. If the user selects the "OK" button, the application causes all fields on the form to be returned to the state they were in when last saved.

The "Count" button calls the server application, causing it to generate a search query (in SQL) from the current segment logic string, and to pass this query to the database. The database then counts the number of customer records that satisfy this query. This gives the number of customers who are members of the current segment. The result is displayed in a pop-up count message box (not shown).

Referring to Figure 3, step 37, selecting the Notes tab on the main screen (see Figure 2) causes the Notes tab (not shown) to be displayed. The Notes tab contains two panes. The upper pane is a free text box, and allows the user to type in a description or notes in their own words. The lower pane displays the current segment logic string. It will be appreciated that normally the user will not be interested in this string, since the graphical representation of the logic on the Definition tab is much more intelligible, especially to a non-technical user.

Referring to Figure 3, step 38, selecting the List tab on the main screen causes the List tab to be displayed, as shown in Figure 10, and calls the server application. The server application uses the current segment logic string to generate a search query (e.g. in SQL) and passes this query to the database. The database thereby retrieves the names and addresses of all customers who are members of the segment. The List tab displays the retrieved information in a scrollable pane, in last name order. The date and time of the list update is displayed next to the list. It should be noted that there is no explicit "List" button: the list is automatically displayed when the List tab is selected.

The List tab also contains four buttons, labelled "Refresh", "Export", "Flag" and "Details". The "Refresh" button refreshes the list and updates the date and time. This is useful if other users are concurrently updating the database, and it is desired to take any recent changes into account. The "Export" button enables the list to be exported to a named file. The "Flag" button pops up a dialogue box, which allows the user to define a new attribute, and to link all customers in the current segment to it. The "Details" button allows customer details to be viewed and/or edited.

### Some possible modifications

It will be appreciated that many modifications may be made to the system described above without departing from the scope of the present invention. For example, the invention is not restricted to customer segments, nor to retail applications, but may be used wherever it is required to subset a class of objects dependant on some combination of their properties. Thus it may be used in connection with other types of database, such as local government records, medical histories, product return records, trend or cluster analysis, etc. Also, different graphical icons, labels and screens from those described above may be used.

## Claims

1. A computer system comprising:
(a) a database (15) containing a number of records;
(b) a graphical user interface (13) for enabling a user to create and update a query using nested graphical containers (24, 25) to represent nested boolean expressions; and
(c) a process (14) for using the query to access the database, so as to identify the subset of records that satisfy that query.

2. A system according to Claim 1 wherein the graphical containers (24, 25) include containers of two types, representing boolean AND and OR expressions.

3. A system according to Claim 2 wherein the graphical user interface includes means for enabling a user to create a new graphical container within an existing graphical container, the new graphical container being by default given the type (AND or OR) opposite to that of the existing container.

4. A system according to any preceding claim wherein each of the graphical containers contains one or more condition lines or nested graphical containers, each representing a condition.

5. A system according to Claim 4 wherein the graphical user interface includes means for enabling a user to drag a line or container from one graphical container to another.

6. A system according to any preceding claim wherein the graphical user interface comprises means for enabling a user to create a condition within any existing container, by selecting a condition type from a predetermined list of condition types, and then entering details specific to the selected type.

7. A method of selecting records from a database in a computer system, the method comprising:
(a) enabling a user to create a query in a graphical user interface, using nested graphical containers to represent nested boolean expressions, and
(b) using the query to access the database, so as to generate a list of records that satisfy that query.

8. A method according to Claim 7 wherein the graphical containers include containers of two types, representing boolean AND and OR expressions.

9. A method according to Claim 8, including enabling the user to create a new graphical container within an existing graphical container, and giving the new graphical container by default the type (AND or OR) opposite to that of the existing container.

10. A method according to any of Claims 7 to 9, wherein each of the graphical containers contains one or more condition lines or nested graphical containers, each representing a condition.

11. A method according to Claim 10, including enabling the user to drag a line or container from one graphical container to another.

12. A method according to any of Claims 7 to 11, including:
(a) displaying a predetermined list of condition types;
(b) enabling the user to select a condition type from the list;
(c) prompting the user to enter details specific to the selected type; and
(d) creating a condition of the selected type within a selected container.
